# EUROPÄISCHE PATENTSCHRIFT

(11) **EP 1 212 228 B1**
(45) Veröffentlichungstag und Bekanntmachung des Hinweises auf die Patenterteilung: **09.04.2003**
(21) Anmeldenummer: 00960575.9
(22) Anmeldetag: 31.08.2000
(51) Int. Cl.: B61K 9/12, G01B 7/28, G01G 19/02, G01M 17/10

(54) **VORRICHTUNG ZUR FESTSTELLUNG VON UNRUNDHEITEN UND FLACHSTELLEN AN RÄDERN BEI SCHIENENFAHRZEUGEN**
DEVICE FOR DETECTING ECCENTRICITIES OR WHEEL FLATS OF RAIL VEHICLE WHEELS
DISPOSITIF PERMETTANT DE DETECTER DES EXCENTRICITES ET DES ZONES PLATES SUR DES ROUES DE VEHICULE SUR RAILS

(30) Priorität: 02.09.1999 DE 19941843
(43) Veröffentlichungstag der Anmeldung: 12.06.2002
(73) Patentinhaber: Schenck Process GmbH, 64293 Darmstadt (DE)
(72) Erfinder: GROLL, Peter, 64297 Darmstadt (DE)
(74) Vertreter: Behrens, Helmut, Dipl.-Ing.
(86) Internationale Anmeldenummer: EP0008533
(87) Internationale Veröffentlichungsnummer: WO01017837

(56) Entgegenhaltungen:
- DE-A- 3 309 908
- DE-A- 4 439 342
- DE-B- 1 170 445
- SU-A- 709 440
- US-A- 4 702 104
- PATENT ABSTRACTS OF JAPAN vol. 006, no. 198 (P-147), 7. Oktober 1982 (1982-10-07) & JP 57 106805 A (JAPANESE NATIONAL RAILWAYS;OTHERS: 01), 2. Juli 1982 (1982-07-02)

## Beschreibung

Die Erfindung betrifft eine Vorrichtung zur Feststellung von Unrundheiten und Flachstellen an Rädern bei Schienenfahrzeugen gemäß dem Oberbegriff des Patentanspruchs 1.

Im Zuge der Sicherheit des Bahnverkehrs bei immer höheren Zuggeschwindigkeiten ist es zunehmend wichtiger, auch schon geringe Unrundheiten und Flachstellen an Rädern von Eisenbahnfahrzeugen festzustellen. So besteht die Radaufstandskraft die auf die Schiene wirkt, sowohl aus einer statischen Gewichtsbelastung und einem dynamischen Anteil, der mit zunehmender Geschwindigkeit ansteigt. Dabei erhöht sich der dynamische Anteil der Radaufstandskraft, wenn das Rad unrund ist oder über Flachstellen verfügt. Insbesondere bei hohen Zuggeschwindigkeiten kann diese dynamische Radaufstandskraft bei Unrundheiten oder Flachstellen so groß werden, daß dadurch Schäden am Rad oder an der Schiene verursacht werden, die auch zu Zugunfällen führen können. Deshalb ist es wünschenswert, derartige Unrundheiten und Flachstellen sicher und frühzeitig ermitteln zu können.

Eine derartige Vorrichtung zur Ermittlung unrunder Räder an Eisenbahnfahrzeugen ist bereits durch die DE 44 39 342 C2 vorbekannt. Bei dieser Vorrichtung sind auf einer Meßstrecke am Schienenfuß im Bereich jeder Schwelle beidseitig jeweils zwei Sensoren aus Dehnungsmeßstreifen appliziert, die die Schwellenreaktionskräfte erfassen. Weiterhin sind noch Schubkraftsensoren vorgesehen, die jeweils am Anfang und Ende der Meßstrecke in der neutralen Phase der Schiene angeordnet sind.

Wie aus den erfaßten Schubkräften und den Schwellenreaktionskräften die Unrundheit ermittelt wird, ist im einzelnen dort nicht beschrieben. Da bei dieser Anordnung insbesondere die Schwellenreaktionskräfte mit Kraftsensoren erfaßt werden, die aus Dehnungsmeßstreifen bestehen, die unmittelbar auf dem Schienenfuß appliziert sind, können diese nur schwer gegen Beschädigungen geschützt werden und sind dann auch nur mit hohem Aufwand wieder Instand zu setzen.

Aus der DE-PS 1 170 445 ist ein Verfahren zu Ermittlung der Pfeilhöhe von Flachstellen an Einsenbahnrädern vorbekannt. Dort wird die Schienendurchbiegung, die durch die Flachstellen verursacht wird, als Stoßmeßwert ermittelt und mittels einer komplizierten Elektronikschaltung ausgewertet. Mit diesem Verfahren sind aber offensichtlich nur Flachstellen und keine anderen Unrundheiten feststellbar. Weiterhin ist aus dieser Schrift auch nicht bekannt, mit welchen Mitteln die Raddruckmeßwerte ermittelt werden.

Der Erfindung liegt deshalb die Aufgabe zugrunde, alle Radunrundheiten bei einem auf der Schiene fahrenden Rad zuverlässig und genau festzustellen.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung hat den Vorteil, daß mit dieser Vorrichtung außer den Flachstellen auch andere Unrundheiten oder Radreifenbrüche genau und sicher feststellbar sind. Da diese Vorrichtung auch ohne Unterbrechung in das Schienennetz integrierbar ist, kann die Unrundheit vorteilhafterweise auch bei normaler Überfahrgeschwindigkeit ohne Beeinträchtigung des Betriebsablaufs erfolgen.

Durch die Erfassung der Vertikalkräfte mit hochgenauen Wägezellen zwischen dem Schienenfuß und den Schwellen ist vorteilhafterweise auf einfache Art eine Kalibrierung und Reparatur der Vorrichtung durchführbar. Da diese Wägezellen gleichzeitig auch zur Wägung der überfahrenden Eisenbahnfahrzeuge genutzt werden können, ist vorteilhafterweise auch gleichzeitig während der Überfahrt eine Wägung, Überlastkontrolle und eine Schwerpunktermittlung durchführbar oder zumindest alternativ vornehmbar. So kann bei schneller Überfahrt mit der gleichen Vorrichtung die Unrundheit und Flachstellenprüfung erfolgen und bei langsamer Überfahrt die Wägung, Überlastkontrolle und Schwerpunktlage ermittelt werden.

Bei einer besonderen Ausführungsart mit zusätzlichen Schubspannungsensoren können diese vorteilhafterweise gleichzeitig zur Kraftnebenschlußkorrektur und als Schienenschalter zur Achs- und Fahrzeugidentifizierung genutzt werden.

Durch den Einsatz von Wägezellen mit Kraftrückführungselementen (S-förmig, doppel-S-förmig) in einer weiteren besonderen Ausführungsart führen vorteilhafterweise auch Abweichungen vom vorgesehenen Krafteinleitungsort und -richtung nicht zu Meßfehlern, so daß aufwendige Mittel zur hochgenauen Krafteinleitung entbehrlich sind.

Die Erfindung wird anhand eines Ausführungsbeispiels, das in der Zeichnung dargestellt ist, näher erläutert. Es zeigen:
- Fig. 1:: eine Vorrichtung zur Erkennung von Radunrundheiten und zur Feststellung des Fahrzeuggewichts, und
- Fig. 2:: die Anordnung der Meßwertaufnehmer im Bereich einer Schiene.

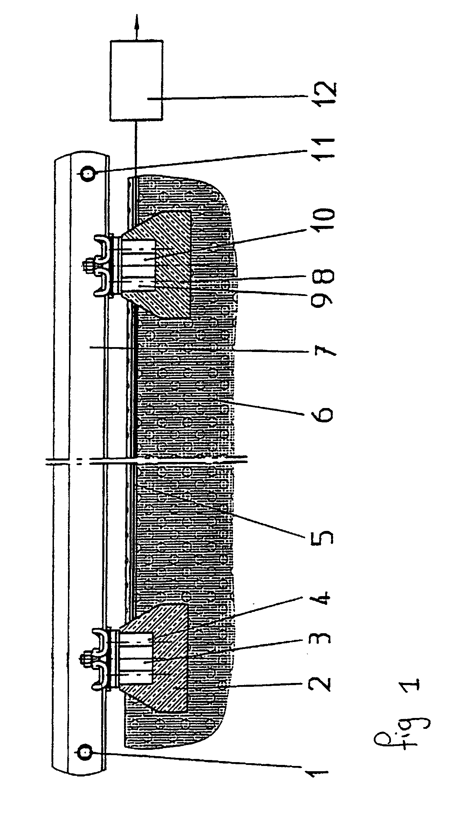

Die Fig. 1 der Zeichnung zeigt eine Vorrichtung zur Ermittlung von Unrundheiten von auf der Schiene 7 bewegten Fahrzeugrädern, die in einer Wägeeinrichtung integriert und mit einer Auswerteeinrichtung 12 verbunden ist, die aufgrund der Vertikalkrafteinleitung in unter der Schiene 7 befindlichen Wägezellen 3, 10 die Unrundheit feststellt.

Die Vorrichtung besteht aus zwei Querträgern unter den Schienen 7, die als Eisenbahnschwellen 2, 8 ausgebildet sind. Diese Schwellen 2, 8 enthalten unter den Schienen 7 jeweils an jeder Seite Aussparungen 4, 9 in denen die Wägezellen 3, 10 angeordnet sind. Die mit den Wägezellen 3, 10 versehenen Schwellen 2, 8 sind ortsfest in einem Schotterbett 6 verlegt. Dabei können die Schwellen mit dem Schotterbett verklebt sein oder auf einem festen Untergrund befestigt werden. Die dargestellte Vorrichtung besteht aus zwei mit Wägezellen 3, 10 ausgestatteten Schwellen 2, 8, wobei für eine weniger genaue Erkennung mindestens eine Schwelle 2 notwendig ist. Da die durch die Unrundheit erzeugten Vertikalkräfte stark von der Überfahrgeschwindigkeit abhängen, ist eine Vorrichtung mit einer Schwelle 2 nur bei relativ hohen Überfahrgeschwindigkeiten hinreichend genau auswertbar. Für eine genauere Messung der Unrundheit und der Flachstellen hat sich eine Meßstrecke von 5,6 Metern mit acht Meßstellen als ausreichend genau herausgestellt, die auch für niedrige Überfahrgeschwindigkeiten geeignet ist. Mit einer derartigen Meßstrecke läßt sich gleichzeitig auch die Gewichtsbelastung eines Drehgestells eines gebräuchlichen Eisenbahnwaggons hinreichend genau ermitteln.

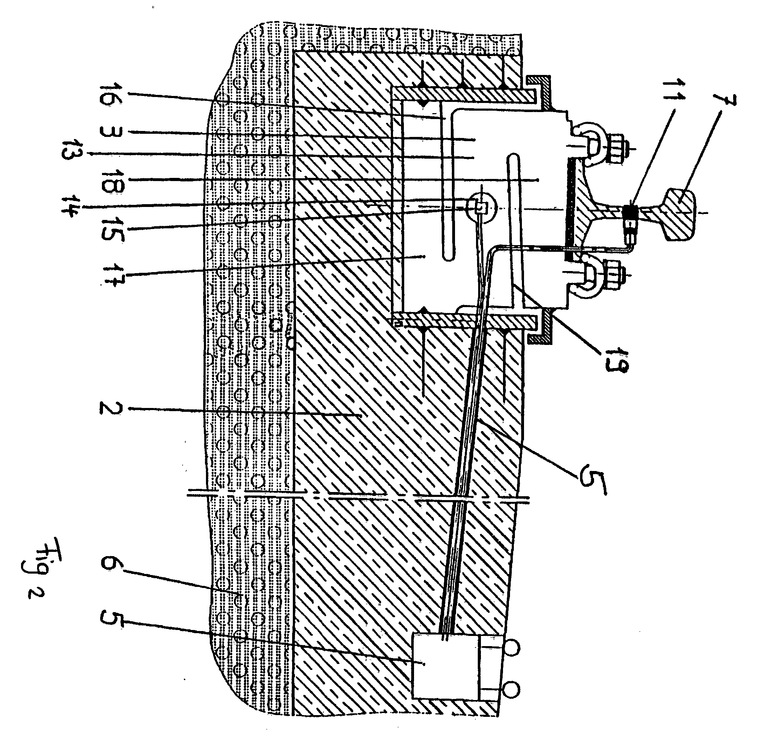

Dazu sind in den Aussparungen 4, 9 der Schwellen 2, 8 Meßwertaufnehmer angeordnet, die als Wägezellen 3, 10 ausgebildet sind und auf denen sich die Schienen 7 abstützen. Die spezielle Anordnung und Ausführung der Wägezellen 3, 10 in den Aussparungen 4, 9 der Schwelle 2 ist im einzelnen aus Fig. 2 der Zeichnung ersichtlich. In der Aussparung 4 ist die Wägezelle 3 fest mit der Schwelle 3 verbunden. Die Wägezelle 3 ist quer und senkrecht unter der Schiene 7 angeordnet. Dabei ist die Wägezelle 3 S-förmig ausgebildet und verfügt oberhalb und unterhalb des Verformungskörpers 13 über Kraftrückführungselemente 17, 18, die durch horizontale Querschlitze 16, 19 gebildet sind. Etwa in der Mitte des Verformungskörpers 13 sind in zwei gegeneinander gerichtete Sackbohrungen 14 Dehnungsmeßstreifen 15 appliziert, die bei einer Belastung ein Signal erzeugen, das der eingeleiteten Vertikalkraft proportional ist. Auf dem oberen Kraftrückführungselement 18 ist eine der Schienen 7 befestigt, über die bei einer Überfahrt mit einem Fahrzeugrad die Kraft in die Wägezelle 3 eingeleitet wird. Zur Verbesserung der Genauigkeitsanforderungen kann auch eine sogenannte Doppel-S-Wägezelle unter jeder Schiene eingesetzt werden, die im Grunde wie zwei seitlich zusammengefügte S-förmige Wägezellen aufgebaut ist.

Unterhalb der Schiene 7 und den kraftaufnehmenden Querträgern oder Schwellen 2, 8 können auch andere Kraftaufnehmer oder Wägezellen vorgesehen werden, soweit durch diese die durch die Räder eingeleiteten Vertikalkräfte ermittelbar sind.

In der Schwelle 2, 8 sind horizontal seitlich und längs der Schiene Kabelkanäle 5 vorgesehen, durch die die Wägezellen 3, 10 und die am Anfang und Ende der Meßstrecke angeordneten Schubspannungsaufnehmer 1 ,11 mit einer Auswertevorrichtung 12 elektrisch verbunden sind. Dabei sind alle Aufnehmer 1, 3, 10, 11 über separate Kanäle an die Auswertevorrichtung 12 herangeführt, so daß für unterschiedliche Auswertungen die geeignetsten Verknüpfungen der Signale erfolgen können. Es können aber auch alle Wägezellen 3, 10 parallel geschaltet an die Auswertevorrichtung 12 herangeführt sein, so daß der zeitliche Signalverlauf und die Zuordnung zu den überfahrenden Achsen, Lasten oder Waggons durch mindestens einen zusätzlichen Schienenschalter am Anfang der Meßstrecke vorgenommen wird. Die Funktion des Schienenschalters wird dabei gleichzeitig durch die Schubspannungsaufnehmer 1, 11 erfüllt, die beim Überfahren des Rades einen Steuerimpuls erzeugen. Zumindest für die Auswertung der Unrundheit und der Flachstellenfeststellung ist es vorteilhaft, mindestens für jede Schiene 7 separate Eingangskanäle vorzusehen, um bekannte Störungen wie beispielsweise den Sinuslauf gegenüber Unrundheiten unterscheiden zu können.

In der Auswertevorrichtung 12 werden beim Überfahren der Schienen 7 durch ein Schienenfahrzeug die Signale der Wägezellen 3, 10 einzeln oder als Summe gespeichert und sind durch bekannte Achsabstände mit Hilfe der Schubspannungsaufnehmer 1, 11 als Schienenschalter einem bestimmten Waggon oder dessen Achsen bzw. Rädern zuzuordnen. In der Auswertevorrichtung 12 werden diese Signale über Filterschaltungen von bekannten Störanteilen wie beispielsweise Waggonschwingungen oder den Sinuslauf getrennt und Waggonweise aufsummiert. Vorteilhafterweise wird der durch die Schubspannungsaufnehmer 1, 11 ermittelte Kraftnebenschlußfehler berücksichtigt, so daß diese Summe der Signalanteile dem Gewicht des Waggons bzw. Fahrzeugs entspricht und als solches,anzeigbar ist.

Durch die Aufsummierung der erfaßten Radaufstandskraftsignale beim Überfahren der Meßstrecke bildet die Auswertevorrichtung 12 einen Mittelwert, der dem Signalverlauf eines exakt runden Rades auf der Schiene 7 entsprechen würde. Da hingegen ein unrundes Rad oder ein Flachstellenrad beim Überfahren einer Meßstrecke periodische Vertikalkraftschwankungen verursacht, werden in der Auswertevorrichtung 12 die Vertikalkraftschwankungen mit dem ermittelten Mittelwert ins Verhältnis gesetzt. Soweit im Mittelwert bereits regelmäßige Abweichungen wie beispielsweise Waggonschwingungen, Sinuslauf und vergleichbare Störanteile berücksichtigt wurden, stellt die Abweichung ein Maß der Unrundheit des beurteilten Rades dar. Diese Unrundheit kann dann angezeigt oder als Unrunddefekt signalisiert werden, soweit ein vorgegebener Grenzwert überschritten wird.

Die Auswertevorrichtung 12 kann aber auch so ausgebildet sein, daß aus den erfaßten und gespeicherten Vertikalkraftsignalen ein Referenzsignalverlauf ermittelt wird. Ein derartiger Referenzsignalverlauf könnte durch die Anwendung der Regeln der nichtlinearen Dynamik mit Hilfe von Rechenschaltungen erfolgen. Durch Vergleich des Referenzsignalsverlaufs mit dem tatsächlichen Signalverlauf eines Rades kann die Auswertevorrichtung 12 dann eine Unrundheit oder eine Flachstelle ermitteln und anzeigen. Dabei kann die Auswertevorrichtung 12 zusätzlich auch die parallel über die beiden Schienen 7 rollenden Räder signalmäßig miteinander vergleichen und bewerten, um die Feststellgenauigkeit der Unrundheiten zu erhöhen. So treten beispielweise Schwerpunktverlagerungen auf einer Achse auf, soweit ein Rad eine Unrundheit aufweist. Derartige Kriterien könnten zur Beurteilung der Unrundheiten zusätzlich herangezogen werden.

Je nach den Genauigkeitsanforderungen ist die Länge der Meßstrecke oder die Überfahrgeschwindigkeit festzulegen. Bei hohen Überfahrgeschwindigkeiten kann die Unrundheit der Räder bereits von Meßstrecken mit nur einem Meßwertaufnehmer 3 pro Schiene ermittelt werden. Eine derartige Vorrichtung zur Feststellung von Unrundheiten könnte mit einer Wägeeinrichtung so kombiniert sein, daß diese mit normalen Fahrgeschwindigkeiten zur Unrundheit und bei langsamen Überfahrgeschwindigkeiten zur Wägung genutzt wird.

Werden hingegen längere Meßstrecken, die mindestens eine Radumdrehungslänge oder eine Drehgestellänge erfassen können vorgesehen, so kann auch schon bei geringen Überfahrgeschwindigkeiten die Unrundheit bzw. die Flachstelle erkannt und gleichzeitig auch eine Wägung durchgeführt werden. Mit einer derartigen Vorrichtung könnte auch gleichzeitig eine Überlastkontrolle und eine Schwerpunktkontrolle erfolgen. Dabei müßten der Auswertevorrichtung 12 Grenzlastbereiche für bestimmte Waggontypen vorgegeben werden, die nach dessen Identifizierung mit dem gemessenen Gewicht verglichen würden und eine festgestellte Überlast signalisierbar oder anzeigbar wäre. Bei der Schwerpunktkontrolle könnte die Auswertevorrichtung 12 über die gemessenen Achslasten und nach Identifizierung des Waggontyps mit Hilfe der vorgegebenen Achsabstände den Schwerpunkt errechnen und beim Abweichen der Schwerpunktlage von einem vorgegebenen Bereich dieses ebenfalls signalisiert oder angezeigt werden.

## Patentansprüche

1. Vorrichtung zur Feststellung von Unrundheiten und Flachstellen an Fahrzeugrädern bei Schienenfahrzeugen innerhalb einer vorgegebenen Meßstrecke mit Hilfe von mehreren Kraftaufnehmern (3,10) zur Ermittlung der auf die Schienen wirkenden Vertikalkräfte, wobei eine Auswertevorrichtung (12) voegesehen ist, die Unrundheiten bzw. Flachstellen signalisiert **dadurch gekennzeichnet, daß** die Kraftaufnehmer als Wägezellen (3, 10) ausgebildet sind, die zwischen den Schienen (7) und ortsfesten Querträgern oder Schwellen (2, 8) angeordnet sind und daß die Auswertevorrichtung (12) beim Überfahren der Meßstrecke aus den Vertikalkraftsignalen eine mittlere Gewichtsbelastung bildet und diese mit dem zeitlichen Signalverlauf vergleicht und beim Überschreiten einer vorgegebenen Abweichung als Unrundheit bzw. Flachstelle signalisiert oder anzeigt.

2. Vorrichtung nach Anspruch 1, **dadurch gekennzeichnet, daß** die Wägezellen (3, 10) in einer Aussparung (4, 9) in den Schwellen (2, 8) vorgesehen sind, wobei sich die Fahrschienen auf den Wägezellen (3, 10) abstützen.

3. Vorrichtung nach Anspruch 1 oder 2, **dadurch gekennzeichnet, daß** die Wägezellen (3, 10) als Kraftmeßvorrichtung mit Kraftrückführungselementen (17, 18) ausgebildet sind.

4. Vorrichtung nach einem der vorhergehenden Ansprüche, **dadurch gekennzeichnet, daß** die Meßstrecke aus dem Erfassungsbereich mehrerer Wägezellen (3, 10) pro Schiene (7) gebildet wird.

5. Vorrichtung nach einem der vorhergehenden Ansprüche, **dadurch gekennzeichnet, daß** am Anfang und/oder am Ende der Meßstrecke Schubspannungsaufnehmer (1, 11) in der neutralen Phase der Schiene (7) vorgesehen sind, die zur Kraftnebenschlußkorrektur und/oder als Schienenschalter dienen.

6. Vorrichtung nach einem der vorhergehenden Ansprüche, **dadurch gekennzeichnet, daß** aufgrund der erfaßten Vertikalkraftsignale und der Schubspannungsmessung in der Auswertevorrichtung (12) aus dem mittleren Belastungswert der einzelnen Räder oder Drehgestelle und aus den identifizierten Rädern oder Drehgestellen für ein Waggon zusätzlich die Summe der mittleren Belastung gebildet wird, die das Waggongewicht darstellt.

7. Vorrichtung nach Anspruch 6, **dadurch gekennzeichnet, daß** aufgrund der identifizierten Waggontypen und dem ermittelten Waggongewicht in der Auswertevorrichtung (12) das Waggongewicht mit einem vorgegebenen Höchstgewicht verglichen wird und beim Überschreiten als Überlast signalisierbar ist.

8. Vorrichtung nach Anspruch 6, **dadurch gekennzeichnet, daß** aufgrund der identifizierten Waggontypen und den ermittelten mittleren Achs- oder Drehgestellbelastungen in der Auswertevorrichtung (12) mit Hilfe von vorgegebenen Achsabständen die Schwerpunktlage ermittelt und mit einem vorgegebenen zulässigen Schwerpunktbereich verglichen wird und beim Überschreiten des Schwerpunktbereichs dies als Schwerpunktfehler signalisierbar ist.

## Claims

1. A device for detecting eccentricities and wheel flats on the vehicle wheels of railed vehicles within a predefined measurement path with the help of a plurality of force transducers (3, 10) for detecting the vertical forces effective on the rails, wherein there is provided an evaluating device (12) which signals the eccentricities or the wheel flats, **characterised in that** the force transducers are in the form of load cells (3, 10) which are arranged between the rails (7) and fixed cross-beams or sleepers (2, 8), and **in that** the evaluating device (12) forms an average load weight during the passage over the measurement path from the vertical force signals and compares this with the signal waveform over time, and signals or displays this as an eccentricity or a wheel flat should a predefined deviation be exceeded.

2. A device in accordance with Claim 1, **characterised in that** the load cells (3, 10) are provided in a recess (4, 9) in the sleepers (2, 8, wherein the rails are supported on the load cells (3, 10).

3. A device in accordance with Claim 1 or 2, **characterised in that** the load cells (3, 10) are in the form of force measuring devices incorporating force feedback elements (17, 18).

4. A device in accordance with any of the preceding Claims, **characterised in that** the measurement path is formed from the detection range of a plurality of load cells (3, 10) per rail (7).

5. A device in accordance with any of the preceding Claims, **characterised in that** shear stress transducers (1, 11) are provided in the neutral phase of the rail (7) at the beginning and/or at the end of the measurement path, and these transducers serve for correcting shunt forces and/or as rail switches.

6. A device in accordance with any of the preceding Claims, **characterised in that**, on the basis of the detected vertical force signals and the measurement of the shear stress, the sum of the average load, which represents the weight of the wagon, is additionally formed in the evaluating device (12) from the average load weight of the individual wheels or bogies and from the identified wheels or bogies for a wagon.

7. A device in accordance with Claim 6, **characterised in that**, on the basis of the identified type of wagon and the determined weight of the wagon, the weight of the wagon is compared in the evaluating device (12) with a predefined maximum weight and this is adapted to be signalled as an overload should the maximum be exceeded.

8. A device in accordance with Claim 6, **characterised in that**, on the basis of the identified type of wagon and the average axle or bogie loads Chat have been determined, the location of the centre of gravity is determined in the evaluating device (12) with the aid of predefined axle spacings and is compared with a predefined permissible range of centres of gravity and this is adapted to be signalled as an error in the centre of gravity should the range of centres of gravity be exceeded.

## Revendications

1. Dispositif permettant de détecter des excentricités et des zones plates sur des roues de véhicules ferroviaires à l'intérieur d'un parcours de mesure prédéfini, à l'aide de plusieurs capteurs de force (3, 10), pour déterminer les forces verticales agissant sur les rails, un dispositif d'exploitation (12) étant prévu qui signale les excentricités ou zones plates, **caractérisé en ce que** les capteurs de force sont conformés en cellules de pesée (3, 10) qui sont disposées entre les rails (7) et des poutres transversales fixes ou traverses (2, 8) et **en ce que** le dispositif d'exploitation (12) forme, en passant sur le tronçon de mesure, à partir des signaux des forces verticales, une charge de poids moyennes et compare celle-ci à la courbe des signaux dans le temps et la signale ou l'indique en tant qu'excentricité ou zone plate lorsqu'un écart prédéfini est dépassé.

2. Dispositif selon la revendication 1, **caractérisé en ce que** les cellules de pesée (3, 10) sont prévues dans une découpe (4, 9) des traverses (2, 8), les rails prenant appui sur les cellules de pesée (3, 10).

3. Dispositif selon la revendication 1 ou 2, **caractérisé en ce que** les cellules de pesée (3, 10) sont réalisées sous la forme d'un dispositif de mesure de force avec éléments de retour de force (17, 18).

4. Dispositif selon l'une des revendications précédentes, **caractérisé en ce que** le parcours de mesure est constitué par la zone de détection de plusieurs cellules de pesée (3, 10) par rail (7).

5. Dispositif selon l'une des revendications précédentes, **caractérisé en ce qu'**au début et/ou à a fin du parcours de mesure sont prévus des capteurs de cisaillement (1, 11) dans la phase neutre du rail (7) qui servent à la correction de la dérivation des forces et/ou comme interrupteur de rail.

6. Dispositif selon l'une des revendications précédentes, **caractérisé en ce que** sur la base des signaux détectés des forces verticales et de la mesure du cisaillement, il est formé en outre, dans le dispositif d'exploitation (13), à partir de la valeur de charge moyenne des différentes roues ou boggies et à partir des roues ou boggies identifiés pour un wagon, la somme de la charge moyenne qui représente le poids du wagon.

7. Dispositif selon la revendication 6, **caractérisé en ce que** sur la base des types identifiés du wagon et du poids déterminé du wagon, dans le dispositif d'exploitation (12), le poids du wagon est comparé à un poids maximal prédéfini et peut être signalé comme surcharge en cas de dépassement.

8. Dispositif selon la revendication 6, **caractérisé en ce que** sur la base des types identifiés du wagon et des charges moyennes déterminées sur les essieux ou boggies, dans le dispositif d'exploitation (10), on détermine à l'aide des distances prédéfinies entre essieux, le centre de gravité et on le compare à une plage admissible prédéfinie de centre de gravité, et en cas de dépassement de la plage de centre de gravité, ceci peut être signalé comme un défaut de centre de gravité.
